# EUROPÄISCHE PATENTSCHRIFT

(11) **EP 3 781 638 B1**
(45) Veröffentlichungstag und Bekanntmachung des Hinweises auf die Patenterteilung: **18.05.2022**
(21) Anmeldenummer: 19717275.2
(22) Anmeldetag: 08.04.2019
(51) Int. Cl.: C09J 123/14, C08F 210/06, C08F 4/659

(54) **DAUERKLEBRIGE HAFTKLEBSTOFFE MIT VERBESSERTER UMWELTVERTRAEGLICHKEIT**
PERMANENTLY TACKY ADHESIVES WITH IMPROVED ENVIRONMENTAL COMPATIBILITY
ADHÉSIFS DE CONTACT DE LONGUE TENUE À IMPACT RÉDUIT SUR L'ENVIRONNEMENT

(30) Priorität: 18.04.2018 DE 102018109269
(43) Veröffentlichungstag der Anmeldung: 24.02.2021
(73) Patentinhaber: Clariant International Ltd, 4132 Muttenz (CH)
(72) Erfinder: SCHWABE, Jeremia, 86150 Augsburg (DE); HAUCK, Erik, 66953 Pirmasens (DE); HOHNER, Gerd, 86152 Augsburg (DE)
(74) Vertreter: Kuba, Stefan
(86) Internationale Anmeldenummer: PCT/EP2019/058834
(87) Internationale Veröffentlichungsnummer: WO 2019/201649

(56) Entgegenhaltungen:
- EP-A1- 1 788 056
- EP-A1- 2 112 180
- EP-B1- 2 112 180
- WO-A2-2014/205336

## Beschreibung

Die Erfindung betrifft harz- und mineralölfreie Haftklebstoffe zur Verklebung von Substraten, wobei die Haftklebstoffe ein Copolymer des Propylens enthalten, welches mit Metallocenkatalysatoren hergestellt wurde.

Haftklebstoffe (pressure sensitive adhesives bzw. PSAs) sind geeignet, um Klebeverbindungen zwischen den Oberflächen von Fügenteilen aus diversen Materialien (Substrate) herzustellen. Hierbei werden die Substrate, auch solche mit niedriger Oberflächenenergie, benetzt und durch leichten Druck der Fügeteile gegeneinander zusammengefügt. Die auf physikalischen Grundlagen beruhende Klebewirkung ist meist reversibel und kann dann ohne Zerstörung der Substrate gelöst werden.

Die Anwendungsmöglichkeiten von Haftklebemassen sind sehr vielseitig. Sie werden insbesondere für Klebeverbindungen eingesetzt, die reversibel sind und keine Klebstoffrückstände auf dem Substrat hinterlassen, wie z.B. Schutzfolien, Maler-Kreppbänder, Notiz-Zettel, Etiketten, Heftpflaster und Bastelartikel. Unter Umständen sind aber auch permanente Verklebungen realisierbar, wie z.B. bei Sicherheitsetiketten, Sicherheitsumschlägen, Sicherheitsbeuteln, Folienklebebändern, Filtern, Verpackungen, Hygieneartikel und Verklebungen im Automobilbereich oder Bau.

Die Verarbeitung von Haftklebstoffen insbesondere der Auftrag auf die entsprechenden Substrate kann durch diverse Verfahren realisiert werden, so z.B. aus der Schmelze, aus einer wässrigen Dispersion oder aus einer Lösung unter Verwendung organischer Lösemittel.

Haftklebemassen, die aus der Schmelze aufgetragen werden, gehören zu den Schmelzklebern, die durch Schmelzen der Klebemasse in einen Zustand versetzt werden in dem sie sich leicht auf die zu verklebenden Substrate applizieren und verkleben lassen. Im Gegensatz zu konventionellen Schmelzklebern, zeichnen sich Haftklebstoffe jedoch durch eine unendlich lange offene Zeit, d.h. die Zeitspanne in der der Klebstoff zum Verkleben eingesetzt werden kann, aus. Dies resultiert in einer Dauerklebrigkeit bei Raumtemperatur. Im Gegensatz dazu besitzt ein konventioneller Schmelzkleber eine relativ kurze offene Zeit und geht nach dem Abkühlen eine irreversible Verbindung mit dem Substrat ein.

Die Dauerklebrigkeit von Haftklebemassen lässt sich mittels einer physikalischen Kenngröße, nämlich dem "Dahlquist-Kriterium", qualitativ beschreiben. Es stellt ein rheologisches Kriterium für die Klebrigkeit dar und lässt sich aus oszillatorischen Rheometer-Experimenten ableiten. Durch einen Frequenzsweep bei gegebener Temperatur (hier 25°C) lässt sich der Speichermodul des Klebstoffes bestimmen. Ist der Speichermodul bei 25°C und 1 Hz größer als 10⁵ Pa, so ergibt sich keine Klebrigkeit (S.S Heddleson et. Aa; Cereal. Chem 70(6) 744; 1993). Weisen Klebstoffe ein Speichermodul < 10⁵ Pa auf, so besteht Dauerklebrigkeit, wie sie für Haftklebstoffe charakteristisch ist.

Um die Dauerklebrigkeit einer Haftklebemasse realisieren zu können, bestehen Haftklebemassen aus einer Formulierung, die sich aus einem kohäsiven Basispolymer, einem adhäsiven Klebrigmacher, gegebenenfalls in Verbindung mit einem Weichmacher, sowie weiteren Zusätzen zusammensetzt.

Als kohäsives Basispolymer werden Polymere wie z.B. Natur- und Synthesekautschuke, Polyacrylate, Polyisobutylene, Polyolefine, Polyester, Polychroprene, Polyvinylether, Polyurethane, Styrol-Butadien- oder Styrol-Isobuten-Blockcopolymere verwendet. Diese Basispolymere sorgen in der Regel für die kohäsive Wirkung des Klebstoffsystems.

Die adhäsive Wirkung des Klebrigmachers von Haftklebemassen wird in erster Linie von Harz-Komponenten bestimmt. Diese Harze sind niedermolekulare Produkte aus dem C5- oder C9-Strom der Erdölaufbereitung, enthalten oft Aromaten und haben für gewöhnlich eine Glasübergangstemperatur, die über Raumtemperatur liegt.

Somit erhöht die Beimischung von Harzen in Schmelzklebstoffformulierungen die Glastemperaturen der Formulierungen, sodass entsprechende Klebstoffe unter verringerter Kälteflexibilität leiden und das Verwendungsfenster bezüglich Temperatur eingeschränkt ist.

Harze weisen üblicherweise Dichten von z.T. mehr als 1 g/cm³ auf. Die Verwendung solcher Harze in Schmelzklebstoffformulierungen sorgt daher für eine Erhöhung der Dichte, insbesondere in Polyolefin-Formulierungen. Dadurch wird bei konstantem Appliziervolumen, mehr Klebstoff nach Gewicht benötigt, was sowohl einen negativen Kostenfaktor darstellt als auch ein höheres Gewicht der geklebten Substrate bedeutet.

Als Harze kommen Polyterpen-Harze, natürliche und modifizierte Kolophoniumharze, insbesondere Harzester, Glycerinester von Baumharzen, phenolmodifizierte Pentaerythrolester und phenolmodifizierte Terpen-Harze zum Einsatz. Solche Harztypen enthalten reizende/gesundheitsbedenkliche Stoffe wie Abietinsäure und können Allergien auslösen, weshalb sie für Anwendungen im Hygienebereich, für Lebensmittelverpackungen und im medizinischen Bereich fragwürdig sind.

Der Weichmacher in der Klebstoffformulierung dient der Viskositätsabsenkung der Klebstoffzusammensetzung und damit ihrer besseren Verarbeitbarkeit und Applikationsfähigkeit. In der Regel enthalten dauerklebrige Haftklebemassen Mineralöle als Weichmacher, zum Teil in bedeutender Menge.

Mineralöle sind erdölbasiert und enthalten dementsprechend paraffinische, naphtenische, aromatischen und polycyclische Verbindungen, sowie leichtflüchtige organische Verbindungen (volatile organic compounds: VOC), die zu einer erhöhten Belastung der Raumluft beitragen. Die auch als MOSH und MOAH (mineral oil saturated hydrocarbons bzw. mineral oil aromatic hydrocarbons) in Mineralölen enthaltenen Verbindungen werden wegen ihrer Neigung, in menschlichem Gewebe zu kumulieren, als toxikologisch riskant eingestuft. Mineralöle sind für gewöhnlich schlecht in Klebstoffformulierung eingebunden und neigen deshalb zu verstärkter Migration. Aus diesen Gründen sind für Lebensmittelverpackungen sowie verklebte Hygieneprodukte mineralölfreie Formulierungen wünschenswert.

In US6987142 werden druckaktivierte Haftklebemassen auf Basis von Styrol-BlockCopolymeren beschrieben, die als Klebrigmacher Harze und als Weichmacher Mineralöle enthalten.

EP1353997B1 beschreibt Schmelzklebemassen aus amorphen Ethylen/Propylen-Copolymeren, nicht stereoregulären Polypropylen-Homopolymeren und ggf. Klebrigmachern. Die genannten Ethylen-Propylen-Copolymere sind bevorzugt nicht mit Metallocen-Katalysatoren hergestellt und weisen bevorzugte Glasübergangstemperaturen zwischen -33 und -23 °C auf. Die Polypropylen-Homopolymeren sind bevorzugt mit Metallocenkatalysatoren hergestellt, weisen Schmelzviskositäten bei 190°C von > 50.000 mPas und Glasübergangstemperaturen zwischen -15 und +10°C auf.

EP1788056 beschreibt die Verwendung von Polyolefinwachsen in Heißschmelzklebemassen, wobei die Heißschmelzklebemasse mindestens 60% eines oder mehrerer, ataktischer amorpher Polyalphaolefine und bis zu 40% isotaktischer Homo- und/oder Copolymerwachse aus den Monomeren Ethylen oder Propylen und/oder höherer linearer oder verzweigter alpha-Olefine mit 4 bis 20 C-Atomen aufweist.

Es ist bekannt, dass sich Polyolefine, die mit Metallocenkatalysatoren hergestellt wurden, in ihrer Struktur von Polyolefinen unterscheiden, die nach anderen Insertionsmechanismen, beispielsweise mit Ziegler-Natta-Katalysatoren, hergestellt wurden. Diese Unterschiede können z. B. den Comonomereinbau oder die Molmassenverteilung betreffen. In aller Regel ist es jedoch nicht möglich, derartige spezifische Unterschiede auf die Verschiedenheit der anwendungstechnischen Eigenschaften zu übertragen.

US2004/0127614A1 beschreibt Haftklebeformulierungen, die mit Metallocen-katalysatoren hergestellte Polypropylene, sowie Harze und Mineralöle enthalten.

Niedrigmolekulare, amorphe Copolymere aus 1-Olefinen und Ethylen, die mit Hilfe von Metallocenkatalysatoren hergestellt wurden, sind aus EP200351 B2 und EP58677B1 bekannt. Es werden statistische Copolymere aus Ethylen und höheren 1-Olefinen mit C3-C20 beschrieben, die mit verbrückten bzw. unverbrückten Metallocenen vom Typ bis-cyclopentadienyl hergestellt wurden. Die Copolymere eignen sich für die Verwendung in Schmierölen.

US2017088754A1 beschreibt amorphe Poly-alpha-Olefine (APAO) aus Ethylen und höheren 1-Olefinen, insbesondere Propylen, Butylen, 1-Hexen, die mit heterogenen Ziegler-Natta-Katalysatoren hergestellt wurden und für Heißschmelzklebeformulierungen verwendet werden. Hier werden Klebrigmacher für die Verbesserung der Eigenschaften eingesetzt.

Wachsartige Copolymere aus Propylen und Ethylen, die mit Metallocenkatalysatoren hergestellt wurden und teilkristallinen Charakter aufweisen, sind aus EP0384264A1 bekannt.

Es besteht über den Stand der Technik hinaus Bedarf an verbesserten Klebstofformulierungen für PSAs, die weder Harze noch Mineralöle enthalten und damit eine verbesserte Umweltverträglichkeit, ein geringeres Kostenniveau und ein ggf. geringeres Gewicht aufweisen.

EP 2112180 beschreibt Polymere auf Propylenbasis, die 65 bis 80 Mol-% einer Struktureinheit, die von Propylen abgeleitet ist, 5 bis 10 Mol-% einer Struktureinheit, die von Ethylen abgeleitet ist, und 15 bis 25 Mol-% einer Struktureinheit, die von einem C4-20 -Olefin abgeleitet ist, enthalten und sich für die Verwendung als Haftklebstoffe eignen. Die hier offenbarten Terpolymere weisen eine vergleichsweise sehr hohe Viskosität mit einem MFR-Wert im Bereich zwischen 1 to 10 g/10 min, auf.

Es wurde überraschend gefunden, dass bestimmte, mit Metallocenkatalysatoren hergestellte Copolymere des Propylens, besonders für die Anwendung in Haftklebstoffen geeignet sind, ohne dass Harze und Mineralölzusätze erforderlich sind. Harze im Sinne der Erfindung sind niedermolekulare Produkte aus dem C5- oder C9-Strom der Erdölaufbereitung, enthalten Aromaten und haben eine Glasübergangstemperatur, die über Raumtemperatur liegt. Harz- und Mineralölfrei im Sinne der Erfindung bedeutet, dass der Harz- bzw. Mineralölanteil jeweils unter 1 Gew.-% bezogen auf die erfindungsgemäße Haftklebemasse liegt.

Gegenstand der vorliegenden Erfindung sind harz- und mineralölfreie Haftklebemassen, umfassend 55 - 99 Gew.-%, besonders bevorzugt 60 - 95 Gew.-% mindestens eines Copolymers des Propylens und eines oder mehrerer weiterer Monomere, ausgewählt aus der Gruppe aus Ethylen und 1-Olefinen mit 4 bis 20 C-Atomen. Die erfindungsgemäße Haftklebemasse kann optional ein weiteres Polymer umfassen. Das Copolymer des Propylens wird mithilfe von Metallocen-Katalysatoren hergestellt und ist gekennzeichnet durch
a. eine Schmelzviskosität bei 170°C von 20 bis 8000 mPas (DIN 53019), bevorzugt von 30 bis 5000 mPas, besonders bevorzugt von 50 bis 3000 mPas,
b. eine Dichte von 0,84 bis 0,90 g/cm³ (23°C, ISO 1183), bevorzugt von 0,85 bis 0,89 g/cm³,
c. eine Glasübergangstemperatur von weniger als -30°C (DIN EN ISO 11357-2:2014), besonders bevorzugt von weniger als - 35 °C, ganz besonders bevorzugt von weniger als - 40 °C, und
d. einen Fließpunkt, gemessen nach ASTM D97, von kleiner als 50 °C, bevorzugt von kleiner als 40 °C.

In einer bevorzugten Ausführungsform weisen das erfindungsgemäße Copolymer des Propylens eine Schmelzenthalpie, gemessen nach ISO 11357-2, von 0 bis 50 J/g, bevorzugt von 0 bis 30 J/g, besonders bevorzugt von 0 bis 20 J/g auf.

In einer bevorzugten Ausführungsform besteht das für die erfindungsgemäße Haftklebemasse verwendete Copolymer des Propylens aus 70 bis 95 Gew.-% Propylen und aus 5 - 30 Gew.-% Ethylen.

Bevorzugt umfasst die erfindungsgemäße Haftklebemasse neben dem Copolymer des Propylens auch 0 bis 45 Gew.-%, besonders bevorzugt 1 bis 45 Gew.-%, und ganz besonders bevorzugt 5 bis 30 Gew.-% eines oder mehrerer weiterer Polymere, die ausgewählt sind aus der Gruppe der folgenden Polymertypen:
- Weitere Polyolefine:
   Die weiteren Polyolefine können durch Polymerisation von beliebigen unpolaren oder polaren, verzweigten oder unverzweigten Olefinen oder Kombinationen aus diesen erhalten werden. Die Herstellung der Polyolefine kann nach ionischen, radikalischen oder Insertionsmechanismen erfolgen. Bevorzugt sind unpolare Monomere unter Verwendung von Ziegler-Natta-oder Metallocenkatalysatoren zur Herstellung der Polyolefine. Besonders geeignet sind niedermolekulare teilkristalline Homo- oder Copolymere, wie sie sich beispielsweise unter dem Namen Licocene^{®} des Herstellers Clariant im Handel befinden. Weiterhin bevorzugt sind Copolymere des Ethylens mit Propylen oder auch höheren α-Olefinen wie 1-Buten oder 1-Octen, bekannt etwa unter Handelsnamen wie z. B. Versify^{®}, Infuse^{®}, Affinity^{®}, Licocene^{®} oder Engage^{®} (Dow Chemical Comp.) bzw. Vistamaxx^{®} oder Exact^{®} (Exxon Mobil Chemical) oder Vestoplast (Evonik) oder Eastoflex (Eastman). Außerdem bevorzugt sind Blockcopolymere aus Styrol und Dienen wie Isopren oder Butadien, gegebenenfalls mit Anteilen von Ethylen (SIS, SBS, SEBS, SEP). Weiterhin bevorzugt sind sogenannte amorphe Poly-alpha-Olefine (APAO), ataktisches Polypropylen (APP) oder Polyisobuten (PIB).
- Natur- oder Synthesekautschuke, Polyacrylate, Polyester, Polychloroprene, Polyvinylether und/oder Polyurethane;
- unpolare Wachse wie z.B. Polyethylen- oder Polypropylenwachse, Paraffinwachse wie z.B. Fischer-Tropsch-Paraffine, mikro- oder makrokristalline Paraffine, polare Wachse wie z. B. oxidierte oder mit polaren Olefinen gepfropfte Polyolefinwachse, Ethylen-Vinylacetat-Copolymerwachse und/oder Ethylen-Acrylsäure-Copolymerwachse,
Weiterhin können die erfindungsgemäßen Haftklebemassen organische oder anorganische Pigmente, Füllstoffe, Flammschutzmittel, Stabilisatoren, Antistatika, Antioxidantien und Lichtschutzmittel enthalten.

In einer bevorzugten Ausführungsform handelt es sich bei den weiteren Polymeren um weitere Polyolefine, gekennzeichnet durch
a. eine Glasübergangstemperatur von weniger als -15°C (DIN EN ISO 11357-2:2014),
b. eine Schmelzviskosität bei 170°C von weniger als 50.000 mPas (DIN 53019), und
c. einen Fließpunkt von größer als 50°C (ASTM D97).

Besonders bevorzugt handelt es sich dabei um Copolymere des Ethylens oder Propylens wie z. B. Licocene^{®} (Clariant), Versify^{®}, Infuse^{®}, Affinity^{®} oder Engage^{®} (Dow Chemical Comp.) bzw. Vistamaxx^{®} oder Exact^{®} (Exxon Mobil Chemical) oder Vestoplast (Evonik) oder Eastoflex (Eastman).

In einer weiteren bevorzugten Ausführungsform weisen die erfindungsgemäßen Haftklebemassen ein Dahlquist Kriterium von G' ≤ 105 Pa bei 25°C und 1 Hz auf. Das Dahlquist-Kriterium stellt ein rheologisches Kriterium für die Klebrigkeit dar und lässt sich aus oszillatorischen Rheometer-Experimenten ableiten. Durch einen Frequenzsweep bei gegebener Temperatur (hier 25°C) lässt sich der Speichermodul des Klebstoffes bestimmen. Ist der Speichermodul bei 25°C und 1 Hz größer als 10⁵ Pa, so ergibt sich keine Klebrigkeit (S.S Heddleson et. Aa; Cereal. Chem 70(6) 744; 1993). Weisen Klebstoffe ein Speichermodul kleiner als 10⁵ Pa auf, so besteht Dauerklebrigkeit, wie sie für Haftklebstoffe charakteristisch ist.

Zur Herstellung der für die erfindungsgemäßen Haftklebemassen verwendeten Copolymere des Propylens werden Metallocenkatalysatoren verwendet, die aus chiralen oder nichtchiralen Übergangsmetallverbindungen der Formel M¹Lₓ bestehen. Die Übergangsmetallverbindung M¹Lₓ enthält mindestens ein Metallzentralatom M¹, an das mindestens ein π-Ligand L, z. B. ein Cyclopentadienylligand gebunden ist. Darüber hinaus können Substituenten, wie z. B. Halogen-, Alkyl-, Alkoxy- oder Arylgruppen an das Metallzentralatom M¹ gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Zur Aktivierung der Einzentren-Katalysatorsysteme werden geeignete Cokatalysatoren eingesetzt, z.B. aluminiumorganische Verbindungen, insbesondere Alumoxane oder auch aluminiumfreie Systeme. Beispiele für Metallocenkatalysatoren, deren Aktivierung und Handhabung für die Polymerisation sind z.B. in EP 0384264 bzw. EP 0571882 beschrieben. Die Bezeichnung Metallocen umfasst auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z. B. beschrieben in EP 0632063.

Je nach Verfahren können auch geträgerte Einzentren-Katalysatoren zur Anwendung kommen. Bevorzugt sind Katalysatorsysteme, bei welchen die Restgehalte von Trägermaterial und Cokatalysator eine Konzentration von 100 ppm im Produkt nicht überschreiten.

Die für die erfindungsgemäßen Haftklebemassen verwendeten Copolymere des Propylens können in der Formulierung sowohl die Funktion des Basispolymers übernehmen, als auch die Funktionen von Weich- und Klebrigmacher ersetzen. Dadurch ergeben sich mehrere Vorteile für den Anwender. Er muss beispielsweise weniger Komponenten schmelzen und mischen, was zu schnelleren und kostengünstigeren Arbeitsprozessen führt. Außerdem lassen sich rein Polyolefinbasierte PSAs darstellen.

Der Einsatz erfindungsgemäßer Copolymere des Propylens als Klebrigmacher anstelle von Harzen und Weichmachern sorgt für eine verbesserte Einbindung dieser in die Polyolefinmatrix, was zu verringerter Migration (kein Durchbluten) und verringerter Bildung von VOCs führt. Die erfindungsgemäßen Copolymere des Propylens verringern zudem die Glasübergangstemperaturen der Klebstoff-Formulierungen. Dadurch wird das Anwendungsspektrum auch bei tiefen Temperaturen möglich bzw. die Kälteflexibilität entsprechender Materialien verbessert.

Die für die erfindungsgemäßen Haftklebemassen verwendeten Copolymere des Propylens weisen typische Dichten von ca. 0.85 g/cm³ auf. Im Vergleich zu Harzen mit typischen Dichten von ca. 1.0 g/cm³, wird es durch den Einsatz dieser Copolymere des Propylens möglich gleiche Klebevolumen bei weniger Gewicht aufzutragen. Das reduziert nicht nur die Kosten für den Anwender, sondern sorgt auch für Ressourceneinsparung und leichtere Materialien in der Endanwendung.

Die erfindungsgemäßen Haftklebemassen eignen sich zum Verbinden, also Benetzen und Verkleben von Substraten, insbesondere von solchen mit niedrigenergetischen Oberflächen mit einer Oberflächenenergie bei Raumtemperatur von weniger als 35 mN/m, bevorzugt von weniger als 25 mN/m , wie sie z. B. Substrate aus Teflon oder Substraten mit silikonisierten Oberflächen aufweisen.

Folgende Beispiele sollen die Erfindung näher beschreiben, ohne diese jedoch einzuschränken:

### Beispiel 1:

Herstellung eines erfindungsgemäßen Propylen-Ethylen-Copolymeren (in Anlehnung an EP 0384264A1, Beispiele 1 - 16).

Ein trockener 16 dm³-Kessel wurde mit Stickstoff gespült und mit 50 dm³ (entsprechend 3,1 bar) Wasserstoff sowie mit 10 dm³ flüssigem Propylen befüllt. Dann wurden 30 cm³ toluolische Methylaluminoxanlösung (entsprechend 40 mmol Al, mittlerer Oligomerisierungsgrad des Methylaluminoxans n=20) sowie 100 g Ethylen zugegeben und der Ansatz bei 30 °C 15 Minuten gerührt.

Parallel dazu wurden 8,0 mg des Metallocens Dimethylsilyl-bis-1-indenylzirkoniumdichlorid in 15 cm³ toluolischer Methylaluminoxanlösung (20 mmol Al) gelöst und durch 15 minütiges Stehenlassen voraktiviert. Die orangerote Lösung wurde in den Kessel gegeben. Das Polymerisationssystem wurde auf 80 °C erwärmt und durch entsprechende Kühlung während der Polymerisationszeit (60 min) bei dieser Temperatur gehalten. Während der Polymerisationszeit wurden gleichmäßig weitere 330 g Ethylen zudosiert.

Das erhaltene Propylen-Ethylen-Copolymer (Ausbeute 1,95 kg) wies einen Propylengehalt von 79,5 Gew.-% auf. Die Bestimmung erfolgte ¹³C-NMR-spektroskopisch nach Ser van der Ven, Polypropylene and other Polyolefins, Kap. 13, S. 568f, Amsterdam, Oxford, New York, Tokyo 1990. Das Copolymer zeigte folgende Kennzahlen:

| | |
|---|---|
| Schmelz-Viskosität bei 170 °C: | 210 mPa·s (DIN 53019) |
| Dichte bei 23 °C: | 0.85 g/cm3 (ISO 1183) |
| Glasübergangstemperatur: | - 48 °C (DIN EN ISO 11357-2:2014) |
| Schmelzenthalpie: | 0 J/g (ISO 11357-3) |
| Fließpunkt: | 24°C (ASTM D97) |

### Beispiel 2:

Ein trockener 50 dm³- Kessel wurde mit Stickstoff gespült und mit 9 dm³ Isohexan, 11.9 dm³ Wasserstoff (entspricht 530 mmol) sowie 1.4 dm³ Propylen und 140 cm³ Ethylen befüllt.

Parallel dazu wurden 5.2 mg des Metallocens Dimethylsilyl-bis-1-indenylzirkoniumdichlorid in 5 cm³ toluolischer Methylaluminoxanlösung (20 mmol Al) gelöst und durch 15 minütiges Stehenlassen voraktiviert. Die orangerote Lösung wurde in den Kessel gegeben. Das Polymerisationssystem wurde auf 105 °C erwärmt und durch entsprechende Kühlung während der Polymerisationszeit (60 min) bei dieser Temperatur gehalten. Während der Polymerisationszeit wurden gleichmäßig weitere 200 g Ethylen zudosiert.

Das erhaltene Propylen-Ethylen-Copolymer (Ausbeute 2.9 kg) wies einen Propylengehalt von 87.1 Gew.-% auf. Die Bestimmung erfolgte ¹³C-NMR-spektroskopisch nach Ser van der Ven, Polypropylene and other Polyolefins, Kap. 13, S. 568f, Amsterdam, Oxford, New York, Tokyo 1990. Das Copolymer zeigte folgende Kennzahlen:

| | |
|---|---|
| Schmelz-Viskosität bei 170°C: | 4500 mPa·s (DIN 53019) |
| Dichte bei 23 °C: | 0.86 g/cm3 (ISO 1183) |
| Glasübergangstemperatur: | -38 °C (DIN EN ISO 11357-2:2014) |
| Schmelzenthalpie: | 10 J/g (ISO 11357-3) |
| Fließpunkt: | 45°C (ASTM D97) |

Gemäß den Tabellen 1 und 2 wurden Schmelzmischungen der Komponenten durch homogenes Verrühren bei 170°C hergestellt und die Schmelzviskosität und Dichte der resultierenden Haftklebemasse bestimmt. In den Vergleichsformulierungen wurden Harze eingesetzt, die unter den Handelsnamen, Regalite^{®}, Sukorez^{®} (Kolon) Kristalex^{®}, Eastotac^{®}, Piccotac^{®} (Eastman Chemical Company) oder Escorez^{®} (Exxon Mobil) erhältlich sind.

In verschiedenen Versuchen wurde die Klebwirkung der erfindungsgemäßen Heißschmelzklebemasse qualitativ ermittelt.

Hierbei wurde die erfindungsgemäße Haftklebemasse durch Aufschmelzen und Homogenisieren der Materialien bei 200°C und anschließendem Applizieren (Rakeln) bei 180°C auf ein Substrat aufgebracht. Nach 24h wurde dieses so beschichtete Substrat mit einem zweitem Substrat aus demselben oder aus einem anderen Material durch Zusammendrücken der zu verbindenden Seiten verklebt. Nach einer Wartezeit von 5 min wurden die Haftklebeeigenschaften beurteilt, indem die beiden Substrate wieder voneinander gelöst wurden. Hierbei wurde unterschieden, ob die Verklebung
a) adhäsiv lösbar (A) war (d.h. die Klebeverbindung löst sich auf der Substratseite) oder
b) kohäsiv trennbar (C) war (d.h. die Klebeverbindung löst sich innerhalb der Klebstoffphase und es verbleiben Klebstoffreste auf beiden Substratseiten), oder
c) ob es zu einem Materialversagen (M) kam, was eine Zerstörung des Substrats bedeutet, bevor die Klebeverbindung gelöst wird, d.h. die Klebeverbindung ist kohäsiv und adhäsiv stärker als die Substrate.
d) War keine druckaktivierte Verklebung möglich, da die Haftklebemasse nicht durch leichten Daumendruck aktiviert werden konnte, so wurde die Kennzeichnung (D) vergeben.

Des Weiteren wurde die Klebrigkeit (Tack) der Haftklebemasse durch einen haptischen Vergleich bewertet und in die folgenden Kategorien unterteilt: a) deutlich, aggressiv; b) kaum ausgeprägt; c) nicht vorhanden.

Die Bestimmung der offenen Zeit erfolgte durch Aufschmelzen und Homogenisieren der Materialien bei 200°C. Bei 180°C wird auf Karton appliziert (gerakelt) und alle 5s ein Kartonpapierstreifen durch Daumendruck aufgeklebt. Dieser Vorgang wird solange wiederholt bis der Karton nicht oder nur noch wenig klebt. Die gemessene Zeit ab Applikation bis der Karton nicht mehr klebt, ist die offene Zeit.

**Tab. 1 Anwendungsbeispiele (erfindungsgemäß) / (Einsatzmengen in Gew.-%)**

| | AE 1 | AE 2 | AE 3 | AE 4 | AE 5 | AE 6 | AE 7 | AE 8 | AE 9 | AE 10 | AE 11 |
|---|---|---|---|---|---|---|---|---|---|---|---|
| Polyolefin (erf.1) | 75 | 70 | 50 | 65 | 65 | 80 | 90 | 100 | | | |
| Polyolefin (erf.2) | | | | | | | | | 100 | 70 | 50 |
| Versify 4301 | 15 | 20 | | 20 | 20 | 20 | 10 | | | 30 | |
| Vestoplast 703 | 10 | | | | | | | | | | |
| Vestoplast 828 | | 10 | | | | | | | | | |
| Eastoflex 1060 | | | 50 | 15 | | | | | | | 50 |
| Vestoplast 608 | | | | | 15 | | | | | | |
| Viskosität@170°C [mPa·s] | 1814 | 7332 | 1673 | 5025 | 4721 | 3606 | 862 | 200 | 8120 | 7200 | 8100 |
| Dichte [g/cm3] | 0.854 | 0.853 | 0.857 | 0.853 | 0.854 | 0.854 | 0.854 | 0.851 | 0,85 | 0.858 | 0.854 |
| Dahlquist Krit. erfüllt | yes | yes | yes | yes | yes | yes | yes | yes | yes | yes | yes |
| Offene Zeit | Endless | Endless | Endless | Endless | Endless | Endless | Endless | Endless | Endless | Endless | endless |
| Klebeig. Glas / PET | A | A | C | A | A | C | C | C | C | A | C |
| Klebeig. PP / PP | C | C | C | C | C | C | C | C | C | C | C |
| Klebeig. PE/PE | C | C | C | C | C | C | C | C | C | C | C |
| Klebeig. Papier/ Papier | M | M | M | M | M | M | M | M | M | M | M |
| Klebeig. Silikonpapier / Silikonpapier | M | C | C | C | C | M | M | C | M | M | C |
| Klebrigkeit | a | a | a | a | a | a | a | a | a | a | a |

| | | | | | | | | | | | |
|---|---|---|---|---|---|---|---|---|---|---|---|
| Bewertung Klebung: A) adhesiv lösbar C) kohäsiv trennbar M) Materialversagen D) keine druckaktivierte Verklebung möglich. Bewertung Klebrigkeit: a) deutlich, aggressiv b) kaum ausgeprägt c) nicht vorhanden. | | | | | | | | | | | |

**Tab. 2 Vergleichsbeispiele ( nicht erfindungsgemäß) / (Einsatzmengen in Gew.-%)**

| | AV1 | AV2 | AV3 | AV4 | AV5 | AV6 | AV7 |
|---|---|---|---|---|---|---|---|
| Polyolefin (erf. 1) | 45 | 45 | 45 | 70 | | | 55 |
| Polyolefin (erf. 2) | | | | | 45 | 70 | |
| Versify 4200 | 30 | | | | 30 | | |
| Versify 4301 | | 30 | | 15 | | 15 | 15 |
| Vistamaxx 6502 | | | 30 | | | | |
| Regalite 1100 | 25 | 25 | 25 | | 25 | | |
| Sukorez SU 100 | | | | 15 | | 15 | 30 |
| Viskosität@170°C [mPa·s] | 17230 | 17953 | 12357 | 10023 | 120.000 | 40.000 | 7000 (@150°C) |
| Dichte [g/cm3] | 0.882 | 0.884 | 0.882 | 0.871 | 0.885 | 0.872 | n.n. |
| Dahlquist Kriterium erfüllt | no | no | no | no | no | no | no |
| Offene Zeit [s] | 45 | 30 | 95 | 60 | 120 | 135 | 140 |
| Klebeig. Glas / PET | D | D | D | D | D | D | D |
| Klebeig. PP / PP | D | D | D | D | D | D | D |
| Klebeig. PE / PE | D | D | D | D | D | D | D |
| Klebeig. Papier/Papier | D | D | D | D | D | D | D |
| Klebeig. Silikonpapier / Silikonpapier | D | D | D | D | D | D | D |
| Klebrigkeit | c | c | c | c | c | c | c |

| | | | | | | | |
|---|---|---|---|---|---|---|---|
| Bewertung Klebung: A) adhesiv lösbar C) kohäsiv trennbar M) Materialversagen D) keine druckaktivierte Verklebung möglich. Bewertung Klebrigkeit: a) deutlich, aggressiv b) kaum ausgeprägt c) nicht vorhanden. | | | | | | | |

Mit den erfindungsgemäßen Beispielen konnte gezeigt werden das gleiche oder verschiedenartige Substrate mit Hilfe der erfindungsgemäßen Haftklebemaße reversibel verklebt werden können und sich die Klebeverbindung entweder adhäsiv oder kohäsiv lösen lässt ohne das ein Harz oder Weichmacher eingesetzt werden muss. Diese Eigenschaften kann man sich bei der Realisierung von Druckklebeverbindung zu Nutze machen, wie Sie z.B. für den Einsatz in Lebensmittelverpackungen, Windeln, Damenhygieneprodukten und medizinische Produkten wie z.B. Pflaster erforderlich sind. Die Vergleichsbeispiele zeigen keine Dauerklebrigkeit und kurze offene Zeiten. Die meist relativ hohen Schmelzviskositäten der Vergleichsformulierungen sind für eine Applikation aus der Schmelze nachteilig, da eine hohe Applikationstemperatur erforderlich wäre. Diese führt zu einem erhöhten Energiebedarf und kann zu einem unerwünschten Thermoabbau der Polyolefine führen.

### Eingesetzte Rohstoffe:

Vestoplast ^{®} und Eastoflex ^{®} sind amorphe Poly-α-Olefine der Hersteller Evonik bzw. Eastman:
Vestoplast 828: Fließpunkt (ASTM D97) > 150°C
Vestoplast 703 : Fließpunkt (ASTM D97) > 120°C
Eastoflex 1060: Fließpunkt (ASTM D97) > 120°C

Versify^{®} ist ein Ethylen-Copolymer des Herstellers Dow:
Versify 4200: Fließpunkt (ASTM D97) > 150°C
Versify 4301: Fließpunkt (ASTM D97) > 150°C

Vistamaxx^{®} ist ein Propylen-Copolymer des Herstellers ExxonMobil:
Vistamaxx 6502: Fließpunkt (ASTM D97) > 150°C

Sukorez^{®} SU 100 bzw. Regalite^{®} 1010 sind hydrierte Kohlenwasserstoffharze der Hersteller Kolon Ind bzw. Eastman.

## Patentansprüche

1. Harz- und mineralölfreie Haftklebemasse, umfassend 55 - 99 Gew.-% eines Copolymers des Propylens und eines oder mehrerer weiterer Monomere ausgewählt aus der Gruppe aus Ethylen und 1-Olefinen mit 4 bis 20 C-Atomen, wobei das Copolymer mithilfe von Metallocen-Katalysatoren hergestellt wurde und **gekennzeichnet ist durch**
a. eine Schmelzviskosität bei 170°C von 20 bis 8000 mPas (DIN 53019);
b. eine Dichte von 0.84 bis 0.90 g/cm³ (23°C, ISO 1183);
c. eine Glasübergangstemperatur von weniger als -30°C (DIN EN ISO 11357-2:2014);
d. einen Fließpunkt, gemessen nach ASTM D97, von weniger als 50 °C
wobei der Harzanteil, gebildet aus niedermolekularen Produkten aus dem C5-oder C9-Strom der Erdölaufbereitung, die Aromaten enthalten und eine über Raumtemperatur liegende Glasübergangstemperatur haben, und der Mineralölanteil jeweils unter 1 Gew.-%, bezogen auf die erfindungsgemäße Haftklebemasse, liegt und
wobei optional ein weiteres Polymer in der Haftklebemasse enthalten sein kann.

2. Haftklebemasse gemäß Anspruch 1 **gekennzeichnet dadurch, dass** das Copolymer eine Schmelzenthalpie, gemessen nach ISO 11357-2, von 0 - 50 J/g, bevorzugt von 0 - 30 J/g, besonders bevorzugt von 0 - 20 J/g aufweist.

3. Haftklebemasse gemäß Anspruch 1 oder 2, umfassend 55 - 99 Gew.-% eines Copolymers des Propylens und 1 - 45 Gew.-% mindestens eines weiteren Polymers ausgewählt aus der Gruppe der weiteren Polyolefine, der Wachse, der Natur- oder Synthesekautschuke, der Polyacrylate, der Polyester, der Polychloroprene, der Polyvinylether oder der Polyurethane.

4. Haftklebemasse nach Anspruch 3, **dadurch gekennzeichnet, dass** es sich bei dem mindestens einem weiteren Polymer um mindestens ein weiteres Polyolefin handelt.

5. Haftklebemasse gemäß Anspruch 4, **dadurch gekennzeichnet, dass** das weitere Polyolefin
a. eine Glasübergangstemperatur von weniger als -15°C (DIN EN ISO 11357-2:2014),
b. eine Schmelzviskosität bei 170°C von kleiner als 50.000 mPas (DIN 53019) und
c. einen Fließpunkt von größer als 50°C (ASTM D97)
aufweist.

6. Haftklebemasse nach einem der vorhergehenden Ansprüche, **dadurch gekennzeichnet, dass** die Haftklebemasse ein Dahlquist Kriterium von G' ≤ 105 Pa bei 25°C und 1 Hz aufweist.

7. Haftklebemasse nach einem der vorhergehenden Ansprüche, **dadurch gekennzeichnet, dass** das Copolymer des Propylens aus 70-95 Gew.-% Propylen und aus 5-30 Gew.-% Ethylen hervorgegangen ist.

8. Haftklebemasse gemäß einem der vorhergehenden Ansprüche, **dadurch gekennzeichnet, dass** das Copolymer des Propylens eine Schmelzviskosität bei 170°C (DIN 53019) von 30 bis 5000 mPas, besonders bevorzugt von 50 bis 3000 mPas aufweist.

9. Haftklebemasse nach einem der vorhergehenden Ansprüche, **dadurch gekennzeichnet, dass** das Copolymer des Propylens eine Glasübergangstemperatur, gemessen nach DIN EN ISO 11357-2:2014, von weniger als -35 °C aufweist, bevorzugt von weniger als -40 °C.

10. Haftklebemasse nach einem der vorhergehenden Ansprüche, **dadurch gekennzeichnet, dass** das Copolymer des Propylens einen Fließpunkt, gemessen nach ASTM D97, von kleiner als 40 °C aufweist.

11. Haftklebemasse gemäß einem der vorhergehenden Ansprüche, **dadurch gekennzeichnet, dass** diese organische oder anorganische Pigmente, Füllstoffe, Flammschutzmittel, Stabilisatoren, Antistatika, Antioxidantien und Lichtschutzmittel enthält.

12. Verwendung einer Haftklebemasse gemäß einem oder mehreren der vorhergehenden Ansprüche zum Verbinden von Substraten.

13. Verwendung einer Haftklebemasse gemäß Anspruch 12 zum Verbinden eines Substrats mit einer Oberflächenenergie von weniger als 35 mN/m, bevorzugt von weniger als 25 mN/m, mit einem oder mehreren Substraten mit einer beliebigen Oberflächenenergie.

14. Verwendung einer Haftklebemasse gemäß Anspruch 13 zum Verbinden eines Substrats aus Teflon, oder eines Substrats mit silikonisierter Oberfläche mit einem oder mehreren Substraten mit einer beliebigen Oberflächenenergie.

## Claims

1. A resin- and mineral oil-free pressure-sensitive adhesive composition, comprising 55% - 99% by weight of a copolymer of propylene and one or more further monomers selected from the group composed of ethylene and 1-olefins having 4 to 20 carbon atoms, wherein the copolymer has been prepared with the aid of metallocene catalysts and is **characterized by**
a. a melt viscosity at 170°C of 20 to 8000 mPas (DIN 53019);
b. a density of 0.84 to 0.90 g/cm³ (23°C, ISO 1183);
c. a glass transition temperature of less than -30°C (DIN EN ISO 11357-2:2014);
d. a flow point, measured according to ASTM D97, of less than 50°C,
wherein the resin content, formed from low molecular weight products from the C5 or C9 stream of the petroleum preparation, which contain aromatics and have a glass transition temperature above room temperature, and the mineral oil content being in each case less than 1% by weight, based on the pressure sensitive adhesive composition according to the invention, and
wherein a further polymer may optionally be present in the pressure-sensitive adhesive composition.

2. The pressure-sensitive adhesive composition as claimed in claim 1, **characterized in that** the copolymer has an enthalpy of fusion, measured according to ISO 11357-2, of 0 - 50 J/g, preferably of 0 - 30 J/g, particularly preferably of 0 - 20 J/g.

3. The pressure-sensitive adhesive composition as claimed in claim 1 or 2, comprising 55% - 99% by weight of a copolymer of propylene and 1% - 45% by weight of at least one further polymer selected from the group of further polyolefins, of waxes, of natural or synthetic rubbers, of polyacrylates, of polyesters, of polychloroprenes, of polyvinyl ethers or of polyurethanes.

4. The pressure-sensitive adhesive composition as claimed in claim 3, **characterized in that** the at least one further polymer is at least one further polyolefin.

5. The pressure-sensitive adhesive composition as claimed in claim 4, **characterized in that** the further polyolefin has
a. a glass transition temperature of less than -15°C (DIN EN ISO 11357-2:2014),
b. a melt viscosity at 170°C of less than 50 000 mPas (DIN 53019) and
c. a flow point of greater than 50°C (ASTM D97).

6. The pressure-sensitive adhesive composition as claimed in any of the preceding claims, **characterized in that** the pressure-sensitive adhesive composition has a Dahlquist criterion of G' ≤ 105 Pa at 25°C and 1 Hz.

7. The pressure-sensitive adhesive composition as claimed in any of the preceding claims, **characterized in that** the copolymer of propylene is derived from 70%-95% by weight of propylene and from 5%-30% by weight of ethylene.

8. The pressure-sensitive adhesive composition as claimed in any of the preceding claims, **characterized in that** the copolymer of propylene has a melt viscosity at 170°C (DIN 53019) of 30 to 5000 mPas, particularly preferably of 50 to 3000 mPas.

9. The pressure-sensitive adhesive composition as claimed in any of the preceding claims, **characterized in that** the copolymer of propylene has a glass transition temperature, measured according to DIN EN ISO 11357-2:2014, of less than -35°C, preferably of less than -40°C.

10. The pressure-sensitive adhesive composition as claimed in any of the preceding claims, **characterized in that** the copolymer of propylene has a flow point, measured according to ASTM D97, of less than 40°C.

11. The pressure-sensitive adhesive composition as claimed in any of the preceding claims, **characterized in that** it contains organic or inorganic pigments, fillers, flame retardants, stabilizers, antistatic agents, antioxidants and light stabilizers.

12. The use of a pressure-sensitive adhesive composition as claimed in one or more of the preceding claims for the joining of substrates.

13. The use of a pressure-sensitive adhesive composition as claimed in claim 12 for the joining of a substrate with a surface energy of less than 35 mN/m, preferably of less than 25 mN/m, with one or more substrates with any surface energy.

14. The use of a pressure-sensitive adhesive composition as claimed in claim 13 for the joining of a substrate made from Teflon, or of a substrate having a siliconized surface, with one or more substrates with any surface energy.

## Revendications

1. Composition adhésive sensible à la pression sans résine ni huile minérale, comprenant 55-99% en poids d'un copolymère de propylène et d'un ou plusieurs autres monomères choisis dans le groupe constitué par l'éthylène et les 1-oléfines ayant de 4 à 20 atomes de carbone, ledit copolymère ayant été préparé à l'aide de catalyseurs métallocènes et étant **caractérisé par**
a. une viscosité de fusion à 170°C de 20 à 8000 mPas (DIN 53019);
b. une densité de 0.84g à 0.90 g/cm³ (23°C, ISO 1183);
c. une température de transition vitreuse inférieure à -30°C (DIN EN ISO 11357-2:2014);
d. un point d'écoulement, mesuré selon la norme ASTM D97, inférieur à 50 C°
la fraction de résine, formée de produits de faible poids moléculaire provenant du courant en C5 ou C9 de la préparation du pétrole, qui contiennent des aromatiques et ont une température de transition vitreuse supérieure à la température ambiante, et la fraction de l'huile minérale étant chacune inférieure à 1% en poids par rapport à composition adhésive sensible à la pressionselon l'invention, et
un autre polymère pouvant éventuellement être contenu dans la composition adhésive sensible à la pression.

2. Composition adhésive sensible à la pression selon la revendication 1, **caractérisée en ce que** le copolymère présente une enthalpie de fusion, mesurée selon ISO 11357-2, de 0 à 50 J/g, de préférence de 0 à 30 J/g, de manière particulièrement préférée de 0 à 20 J/g.

3. Composition adhésive sensible à la pression selon la revendication 1 ou 2 comprenant, 55 à 99% en poids d'un copolymère du propylène et 1 à 45% en poids d'au moins un autre polymère choisi dans le groupe des autres polyoléfines, des cires, des caoutchoucs naturels ou synthétiques, des polyacrylates, des polyesters, des polychloroprènes, des polyvinyléthers ou des polyuréthanes.

4. Composition adhésive sensible à la pression selon la revendication 3, **caractérisée en ce que** le au moins un autre polymère est au moins une autre polyoléfine.

5. Composition adhésive sensible à la pression selon la revendication 4, **caractérisée en ce que** l'autre polyoléfine a
a. une température de transition vitreuse inférieure à -15°C (DIN EN ISO 11357-2:2014),
b. une viscosité à l'état fondu à 170°C inférieure à 50.000 mPas (DIN 53019) et
c. un point d'écoulement supérieur à 50°C (ASTM D97)

6. Composition adhésive sensible à la pression selon l'une des revendications précédentes, **caractérisée en ce que** la composition adhésive sensible à la pression présente un critère de Dahlquist de G' ≤ 105 Pa à 25°C et 1 Hz.

7. Composition adhésive sensible à la pression selon l'une des revendications précédentes, **caractérisée en ce que** le copolymère de propylène est issu de 70 à 95 % en poids de propylène et de 5 à 30 % en poids d'éthylène.

8. Composition adhésive sensible à la pression selon l'une des revendications précédentes, **caractérisée en ce que** le copolymère du propylène présente une viscosité à l'état fondu à 170°C (DIN 53019) de 30 à 5000 mPas, de préférence de 50 à 3000 mPas.

9. Composition adhésive sensible à la pression selon l'une des revendications précédentes, **caractérisée en ce que** le copolymère du propylène présente une température de transition vitreuse, mesurée selon la norme DIN EN ISO 11357-2:2014, inférieure à -35°C, de préférence inférieure à -40°C.

10. Composition adhésive sensible à la pression selon l'une des revendications précédentes, **caractérisée en ce que** le copolymère du propylène présente un point d'écoulement, mesuré selon ASTM D97, inférieure à -40°C.

11. Composition adhésive sensible à la pression selon l'une des revendications précédentes, **caractérisée en ce qu'**elle contient des pigments organiques ou inorganiques, des charges, des agents ignifuges, des stabilisateurs, des agents antistatiques, des antioxydants et des agents de protection contre la lumière.

12. Utilisation d'une composition adhésive sensible à la pression selon l'une ou plusieurs des revendications précédentes pour la liaison de substrats.

13. Utilisation d'une composition adhesive sensible à la pression selon la revendication 12 pour lier un substrat ayant une énergie de surface inférieure à 35 mN/m, de préférence inférieure à 25 mN/m, à un ou plusieurs substrats ayant une énergie de surface quelconque.

14. Utilisation d'une composition adhésive sensible à la pression selon la revendication 13 pour lier un substrat en téflon ou un substrat avec une surface siliconée à un ou plusieurs substrats avec une énergie de surface quelconque.
